# EUROPÄISCHE PATENTANMELDUNG

(11) **EP 2 700 877 A2**
(43) Veröffentlichungstag der Anmeldung: **26.02.2014**
(21) Anmeldenummer: 13181040.0
(22) Anmeldetag: 20.08.2013
(51) Int. Cl.: F23R 3/00

(54) **Gasturbinenbrennkammer mit prallgekühlten Bolzen der Brennkammerschindeln**

(30) Priorität: 21.08.2012 DE 102012016493
(71) Anmelder: Rolls-Royce Deutschland Ltd & Co KG, 15827 Blankenfelde-Mahlow (DE)
(72) Erfinder: Gerendas, Miklós, 15838 Am Mellensee (DE); Fanter, Maren, 14513 Teltow (DE); Herzog, Volker, 15738 Zeuthen (DE); Sadig, Sermed, 12169 Berlin (DE)
(74) Vertreter: Hoefer & Partner

(57) **Zusammenfassung**

Die Erfindung bezieht sich auf eine Gasturbinenbrennkammer mit einer Brennkammerwand 29, an welcher Brennkammerschindeln 30 mittels Bolzen 31 befestigt sind, wobei im Bereich der Befestigung des Bolzens 31 in der Brennkammerwand 29 zumindest ein Prallkühlloch 32 ausgebildet ist, dessen Mittelachse 33 zur Mittelachse 34 des Bolzens 31 geneigt ist und auf einen Übergangsbereich 35 zwischen dem Bolzen 31 und der Brennkammerschindel 30 trifft.

## Beschreibung

Die Erfindung bezieht sich auf eine Gasturbinenbrennkammer mit einer Brennkammerwand, an welcher Brennkammerschindeln mittels Bolzen befestigt sind.

Der Stand der Technik zeigt unterschiedliche Kühlkonzepte zur Kühlung der Schindeln der Brennkammer. Hierbei werden sowohl Ausnehmungen zur Prallkühlung als auch zur Effusionskühlung eingesetzt. Im Einzelnen zeigt der Stand der Technik beispielhaft folgende Lösungen:
Die WO 92/16798 A1 beschreibt den Aufbau einer Gasturbinenbrennkammer durch mit Stehbolzen befestigten, metallischen Schindeln, welche durch die Kombination von Prall- und Effusionskühlung zu einer effektiven Kühlwirkung führt und somit die Reduktion des Kühlluftverbrauchs erlaubt. Allerdings wird der Druckverlust, welcher über die Wand hinweg existiert, auf zwei Drosselstellen verteilt, den Schindelträger und
die Schindel selbst. Zur Vermeidung von Randleckagen wird meist der größere Anteil des Druckverlustes über den Schindelträger erzeugt, so dass die Kühlluft weniger Veranlassung hat, an der Effusionsschindel vorbeizufließen.

Die GB 2087065 A1 beschreibt eine Schindelkühlkonfiguration mit einer bestifteten bzw. berippten Schindel, wobei jeder einzelne Prallkühlstrahl von einem stromauf liegenden Stift bzw. Rippe auf der Schindel vor der Querströmung geschützt wird. Des Weiteren erhöhen die Stifte bzw. Rippen die zur Wärmeübertragung zur Verfügung stehende Fläche.

Die GB 2356041 A1 beschreibt die Zusammenführung von prall-effusionsgekühlten und bestifteten Schindeln. Auch wird hier die Kühlung des Bolzengrunds durch Effusionsbohrungen beschrieben. So werden auch Effusionsbohrungen durch den Bolzengrund vorgeschlagen, um die Temperatur in diesem hoch belasteten Bereich abzusenken.

Die US 2011/0011095 A beschreibt die Einbringung zusätzlicher Prallkühlbohrungen in die Unterlegscheibe der Befestigungsmutter auf dem Stehbolzen der Schindel. Der Schindelträger ist mit einem Langloch dargestellt. Daher lässt diese Anordnung nur eine einseitige Kühlung des Übergangsbereiches zwischen Stehbolzen und Schindel zu.

Die EP 2 295 865 A2 beschreibt eine Kühlung des Übergangsbereichs zwischen Schindel und separaten Schrauben durch eine hutförmige Unterscheibe mit Kühlungsöffnungen. Die Achsen der Kühlungsöffnungen treffen sich ebenfalls in einem Punkt und auf den Achsen der Schraube. Allerdings geschieht dies in großer Entfernung vom Übergangsbereich zwischen Schrauben und Schindel bzw. zwischen Schindel und zylindrischer Verdickung zur Aufnahme der Schraube in einem Gewinde.

Die DE 10 2007 018 061 A1 beschreibt unterschiedliche Möglichkeiten, um die Oberfläche einer Schindel, auf die die Prallkühlstrahlen treffen, so zu strukturieren, so dass der Wärmeübergang erhöht wird.

Beide Arten an Schindeln, also prall-effusionsgekühlte als auch bestiftete Schindeln, werden mit Stehbolzen an der Brennkammerwand befestigt. Diese Befestigungselemente blockieren den im Stand der Technik beschriebenen Kühlmechanismus. Dort wo ein Stehbolzen auf der Schindel angegossen wurde, sind keine Stifte mehr, durch welche Luft fließen und Wärme aufnehmen könnte. Der Bolzengrund ist durch das Festziehen der Mutter auf dem Stehbolzen ein mechanisch hoch belasteter Bereich, der nicht noch zusätzlich durch Kühlluftbohrungen geschwächt werden sollte. Wenn aber der Bolzengrund nicht ausreichend gekühlt wird, überhitzt dieser und die Lebensdauer der Schindel verkürzt sich.

Der Erfindung liegt die Aufgabe zugrunde, eine Gasturbinenbrennkammer der eingangs genannten Art zu schaffen, welche bei einfachem Aufbau und einfacher, kostengünstiger Herstellbarkeit eine effektive Kühlung der Schindeln gewährleistet.

Erfindungsgemäß wird die Aufgabe durch die Merkmalskombination des Anspruches 1 gelöst, die Unteransprüche zeigen weitere vorteilhafte Ausgestaltungen der Erfindung.

Erfindungsgemäß ist somit vorgesehen, dass durch die Brennkammerwand (Schindelträger) zusätzlich Kühlluft eingeführt wird. Diese Kühlluft wird so zugeführt, dass sie als Prallkühlluft auf den Fußbereich des Bolzens bzw. auf den Übergangsbereich zwischen den Bolzen und der Schindel auftritt. Insbesondere bei zusammen mit der Schindel gegossenen Bolzen ist der Übergangsbereich abgerundet, so dass eine effektive Kühlströmung auf die Fläche, welche durch die Ausrundung gebildet wird, aufgeleitet werden kann, welche sich gleichmäßig verteilt und zu einer effektiven Kühlung des Übergangsbereichs zwischen dem Bolzen und der Schindel führt.

Die Ausrundung kann am einfachsten mit einem konstanten Radius ausgeführt werden. Wenn aber die Festigkeit des Überganges gesteigert werden soll, ist eine elliptisch geformte Ausrundung vorteilhaft, bei der an der Schindel ein größerer Radius verwendet wird, um die Last der Befestigung auf eine große Fläche zu verteilen, und am Bolzen ein kleinerer Radius, so dass die Ausrundung abgeschlossen ist, bevor das Gewinde des Stehbolzens beginnt. Die durch die Ausrundung entstandene Fläche ist dann in der einfachsten Form ein Teil eines kreis- oder ellipsenbasierten Torus (als ellipsenbasierter Torus bzw. Ellipsentorus wird im Folgenden die Oberfläche verstanden, die durch Rotation einer Ellipse statt des üblichen Kreises um eine Achse außerhalb der Ellipse bzw. des Kreises entsteht) .

Durch die erfindungsgemäße Ausgestaltung erfolgt keinerlei Schwächung der Schindel im Befestigungsbereich des Bolzens, weil dort erfindungsgemäß keine zusätzlichen Löcher oder Ausnehmungen erforderlich sind. Vielmehr erfolgt durch die Brennkammerwand eine effektive Zuleitung von Kühlluft.

Um eine symmetrische und gleichmäßige Kühlung zu realisieren, ist es besonders vorteilhaft, wenn mehrere Prallkühllöcher, deren Mittelachsen sich mit der Mittelachse des Bolzens treffen, vorgesehen sind. Diese mehreren Prallkühllöcher können entweder gleichmäßig verteilt oder ungleichmäßig (asymmetrisch) um den Umfang des Bolzens angeordnet sein.

Die Neigung der Prallkühllöcher ist bevorzugt so ausgebildet, dass sich der Schnittpunkt der Mittelachsen der Prallkühllöcher auf der Heißgasseite der Brennkammerschindel befindet und sich mit der Mittelachse des Bolzens trifft.

Erfindungsgemäß werden somit durch den Schindelträger (Brennkammerwand) zusätzliche Prallkühllöcher gebohrt, die so ausgerichtet sind, dass sie die Schindel am Übergang zwischen Bolzen und Schindel in der Fläche treffen, welche durch die Ausrundung mit konstantem oder variablen Radius gebildet wird, um so die Wärme aus diesem Bereich herauszuziehen.

Erfindungsgemäß werden die Prallkühlstrahlen so ausgerichtet sein, dass sich die Achsen der zusätzlichen Prallkühllöcher für die Bolzenkühlung in einem Punkt kreuzen.

Zusätzlich können die Prallkühlstrahlen so ausgerichtet sein, dass sich die Achsen der zusätzlichen Prallkühllöcher für die Bolzenkühlung in einem Punkt kreuzen, welcher auf der Achse des Bolzens liegt.

Insbesondere können die Prallkühlstrahlen so ausgerichtet sein, dass sich die Achsen der zusätzlichen Prallkühllöcher für die Bolzenkühlung in einem Punkt auf der heißgasseitigen Oberfläche der Schindel kreuzen, welcher auch gleichzeitig auf der Achse des Bolzens liegt.

Die im Wesentlichen kreis- bzw. ellipsentorus-förmige Ausrundung ist in der einfachsten Form eine glatte, unstrukturierte Fläche. Bekanntermaßen kann durch eine Strukturierung der Oberfläche mit Rippen, Prismen, Stiften usw., der Wärmeübergang erhöht werden. Erfindungsgemäß können diese bekannten Maßnahmen auch auf die Ausrundungsfläche angewendet werden. Hierbei baut die Struktur auf der mechanisch notwendigen Ausrundung auf und schneidet nicht in sie ein.

Die erfindungsgemäße Lösung kann nicht nur zur Kühlung von angegossenen Stehbolzen, sondern auch zur Kühlung von separaten Schrauben in gleicher Art verwendet werden, wobei auch hier auf den Übergangsbereich zwischen Schraube und Schindel bzw. zwischen Schindel und der Aufdickung der Schindel zur Aufnahme der Schraube in einem Gewinde (sofern vorhanden) gezielt wird.

Diese zusätzliche Luft wird durch wenige lokal vergrößerte oder durch zusätzliche Effusionsbohrungen so durch die Schindel geblasen, dass der Bolzengrund nicht durch die Einbringung der Bohrung geschwächt wird. Dies wird dadurch erreicht, dass die Projektion des Stehbolzendurchmessers auf die heißgasseitige Oberfläche des metallischen Teils der Schindel von keinem Effusionsloch durchstoßen wird.

Erfindungsgemäß ergeben sich unter anderem die folgenden Vorteile:
Dort, wo die Prallkühlstrahlen auf den Übergang zwischen Bolzen und Schindel treffen, ziehen sie besonders viel Wärme aus diesem Bereich heraus.

Durch die lokal vergrößerten oder durch zusätzliche Effusionsbohrungen wird die Filmkühlung auf der Heißgasseite der Brennkammer verbessert und so zusätzlich das Eindringen von Wärme in die Schindel und ihren Bolzen lokal an der Stelle vermindert, an der die Achse des Bolzens die heißgasseitige Oberfläche der Schindel durchstößt.

Durch die Absenkung der Temperatur des Bolzens mit dem die Schindel befestigt wird, erhöht sich die Lebensdauer dieser Anbindung drastisch.

Im Folgenden wird die Erfindung anhand eines Ausführungsbeispiels in Verbindung mit der Zeichnung beschrieben. Dabei zeigt:
- Fig. 1: zeigt eine schematische Darstellung eines Gasturbinentriebwerks gemäß der vorliegenden Erfindung,
- Fig. 2: eine vergrößerte Detail-Schnittansicht eines Befestigungsbereichs einer Schindel an einer Brennkammerwand gemäß eines Ausführungsbeispiels der Erfindung,
- Fig. 3: eine vergrößerte Detail-Schnittansicht eines Befestigungsbereichs einer Schindel an einer Brennkammerwand gemäß eines Ausführungsbeispiels der Erfindung mit elliptischer Ausrundung, und
- Fig. 4: eine vergrößerte Detail-Schnittansicht eines Befestigungsbereichs einer Schindel mittels einer Schraube an einer Brennkammerwand gemäß eines Ausführungsbeispiels der Erfindung mit elliptischer Ausrundung zwischen Schindel und der zur Aufnahme des Gewindes notwendigen Aufdickung der Schindel sowie einer wärmeübergangserhöhenden Strukturierung der Oberfläche dieser Ausrundung.

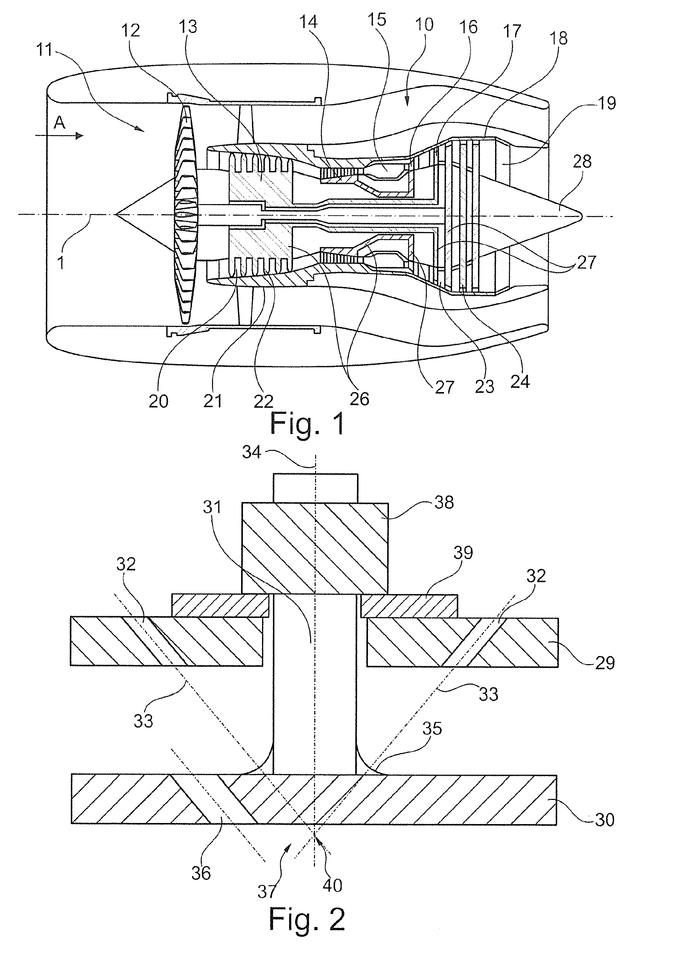

Das Gasturbinentriebwerk 10 gemäß Fig. 1 ist ein allgemein dargestelltes Beispiel einer Turbomaschine, bei der die Erfindung Anwendung finden kann. Das Triebwerk 10 ist in herkömmlicher Weise ausgebildet und umfasst in Strömungsrichtung hintereinander einen Lufteinlass 11, einen in einem Gehäuse umlaufenden Fan 12, einen Mitteldruckkompressor 13, einen Hochdruckkompressor 14, eine Brennkammer 15, eine Hochdruckturbine 16, eine Mitteldruckturbine 17 und eine Niederdruckturbine 18 sowie eine Abgasdüse 19, die sämtlich um eine zentrale Triebwerksachse 1 angeordnet sind.

Der Zwischendruckkompressor 13 und der Hochdruckkompressor 14 umfassen jeweils mehrere Stufen, von denen jede eine in Umfangsrichtung verlaufende Anordnung fester stationärer Leitschaufeln 20 aufweist, die allgemein als Statorschaufeln bezeichnet werden und die radial nach innen vom Triebwerksgehäuse 21 in einem ringförmigen Strömungskanal durch die Kompressoren 13, 14 vorstehen. Die Kompressoren weisen weiter eine Anordnung von Kompressorlaufschaufeln 22 auf, die radial nach außen von einer drehbaren Trommel oder Scheibe 26 vorstehen, die mit Naben 27 der Hochdruckturbine 16 bzw. der Mitteldruckturbine 17 gekoppelt sind.

Die Turbinenabschnitte 16, 17, 18 weisen ähnliche Stufen auf, umfassend eine Anordnung von festen Leitschaufeln 23, die radial nach innen vom Gehäuse 21 in den ringförmigen Strömungskanal durch die Turbinen 16, 17, 18 vorstehen, und eine nachfolgende Anordnung von Turbinenschaufeln 24, die nach außen von einer drehbaren Nabe 27 vorstehen. Die Kompressortrommel oder Kompressorscheibe 26 und die darauf angeordneten Schaufeln 22 sowie die Turbinenrotornabe 27 und die darauf angeordneten Turbinenlaufschaufeln 24 drehen sich im Betrieb um die Triebwerksachse 1.

Die Fig. 2 zeigt in vergrößerter, vereinfachter Darstellung den Befestigungsbereich einer Schindel 30 an einer Brennkammerwand 29. Die Brennkammerwand 29 wird auch als Schindelträger bezeichnet. An der Schindel 30 ist ein Bolzen 31 befestigt, beispielsweise durch Verschweißen. Der Bolzen kann als Schraubenbolzen oder Stehbolzen ausgebildet sein. Im gezeigten Ausführungsbeispiel ist ein Gewindebolzen gezeigt, der mit einer Mutter 38 unter Zwischenlegung einer Unterlegscheibe 39 gegen die Brennkammerwand 29 verspannt ist.

Erfindungsgemäß sind in der Brennkammerwand 29 mehrere Prallkühllöcher 32 ausgebildet, deren Mittelachsen 33 zur Ebene der Brennkammerwand 29 geneigt sind. Die Mittelachsen 33 der Prallkühllöcher 32 bilden somit auch einen Winkel zu der Mittelachse 34 des Bolzens 31.

Wie die Fig. 2 zeigt, treffen die Luftströmungen durch die Prallkühllöcher 32 auf einen Übergangsbereich 35 zwischen dem Bolzen 31 und der Schindel 30 auf. Dieser Übergangsbereich 35 ist abgerundet. Er wird beispielsweise durch eine Schweißnaht oder durch den gemeinsamen Guss von Stehbolzen und Schindel gebildet. Die Mittelachsen 33 der Prallkühllöcher 32 sind so angeordnet, dass sie die Schindel in der durch die Ausrundung gebildeten Fläche treffen und sich in einem gemeinsamen Schnittpunkt 40 kreuzen, welcher auf der Mittelachse 34 des Bolzens 31 liegt. Hierdurch erfolgt eine gleichmäßige und strömungsoptimierte Anströmung des Übergangsbereichs 35 mit Kühlluft.

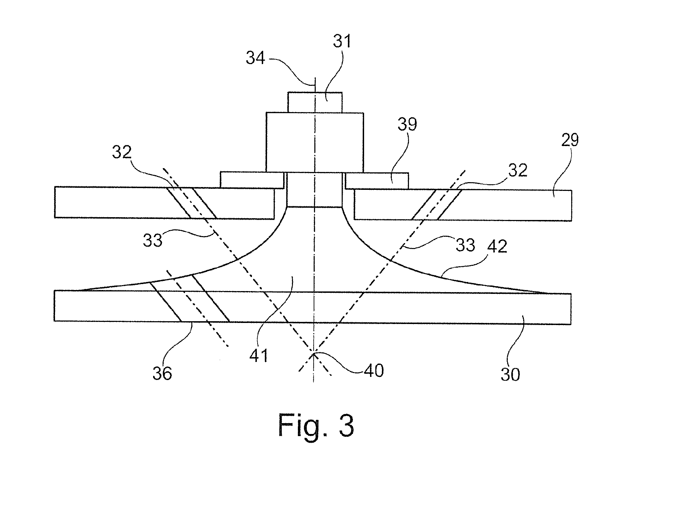

Die Fig. 3 zeigt eine Ansicht analog Fig. 2. Gemäß dem Ausführungsbeispiel der Fig. 3 ist der Bolzen 31 einstückig mit der Schindel 30 ausgebildet, beispielsweise mittels eines Gießverfahrens. Die Schindel weist hierzu eine Aufdickung 41 auf, deren Übergangsquerschnitt zur Schindel 30 in Form einer elliptischen oder elliptoiden Ausrundung 42 ausgebildet ist. Somit ergibt sich ein hochfester Übergang zwischen dem Bolzen 31 und der Schindel 30, welcher, bedingt durch die vergrößerte Oberfläche, zur Erhöhung des Wärmeübergangs optimiert ist.

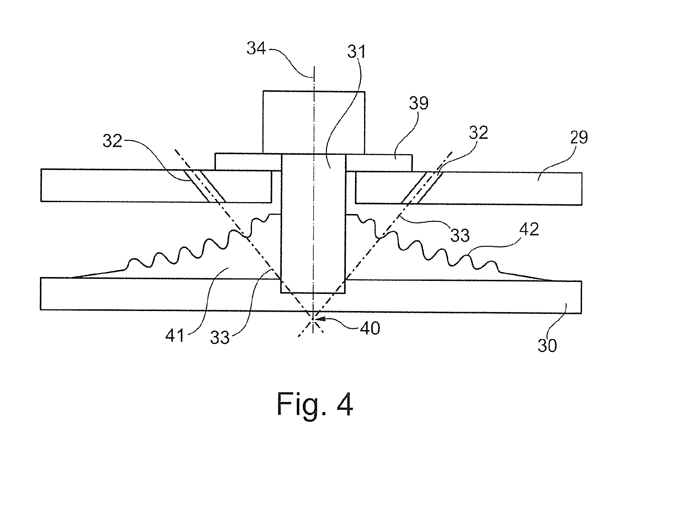

Die Fig. 4 zeigt ein alternatives Ausführungsbeispiel, bei welchem die Aufdickung 41 der Schindel mit einem Innengewinde versehen ist. Der Bolzen 31 ist dabei in Form einer Schraube ausgebildet. Zur Erhöhung des Wärmeübergangs kann es vorteilhaft sein, die Oberfläche der Aufdickung 41 bzw. der elliptischen oder toroiden Ausrundung 42 mit zusätzlichen Oberflächenstrukturen zu versehen. Diese können beispielsweise in Form von wellenartigen Strukturen oder ringartigen Strukturen ausgebildet sein. Auch hierdurch ergibt sich eine Verbesserung des Wärmeübergangs.

Bei den gezeigten Ausführungsbeispielen ist die Aufdickung 41 elliptoid oder toroid dargestellt. Es versteht sich, dass die Aufdickung mit konstantem oder normal zur Achse 34 des Stehbolzens 31 veränderlichem Ausrundungsradius ausgebildet sein kann.

Um den Befestigungsbereich des Bolzens 31 an der Schindel 30 zusätzlich zu kühlen, kann es besonders vorteilhaft sein, ein oder mehrere zusätzliche Effusionslöcher 36 in der Schindel 30 auszubilden. Das gezeigte Effusionsloch 36 befindet sich stromauf, bezogen auf eine Durchströmung der Brennkammer, des Bolzens 31. Die durch das Effusionsloch austretende Kühlströmung kühlt den Bolzenbefestigungsbereich 37 der Schindel 30 zusätzlich.

### Bezugszeichenliste:

- 1: Triebwerksachse
- 10: Gasturbinentriebwerk / Kerntriebwerk
- 11: Lufteinlass
- 12: Fan
- 13: Mitteldruckkompressor (Verdichter)
- 14: Hochdruckkompressor
- 15: Brennkammer
- 16: Hochdruckturbine
- 17: Mitteldruckturbine
- 18: Niederdruckturbine
- 19: Abgasdüse
- 20: Leitschaufeln
- 21: Triebwerksgehäuse
- 22: Kompressorlaufschaufeln
- 23: Leitschaufeln
- 24: Turbinenschaufeln
- 26: Kompressortrommel oder -scheibe
- 27: Turbinenrotornabe
- 28: Auslasskonus
- 29: Brennkammerwand
- 30: Schindel
- 31: Bolzen
- 32: Prallkühlloch
- 33: Mittelachse
- 34: Mittelachse
- 35: Übergangsbereich
- 36: Effusionsloch
- 37: Bolzenbefestigungsbereich
- 38: Mutter
- 39: Unterlegscheibe
- 40: Schnittpunkt
- 41: Aufdickung
- 42: Ausrundung

## Patentansprüche

1. Gasturbinenbrennkammer mit einer Brennkammerwand (29), an welcher Brennkammerschindeln (30) mittels Bolzen (31) befestigt sind, wobei im Bereich der Befestigung des Bolzens (31) in der Brennkammerwand (29) zumindest ein Prallkühlloch (32) ausgebildet ist, dessen Mittelachse (33) zur Mittelachse (34) des Bolzens (31) geneigt ist und auf einen Übergangsbereich (35) zwischen dem Bolzen (31) und der Brennkammerschindel (30) trifft.

2. Gasturbinenbrennkammer nach Anspruch 1, **dadurch gekennzeichnet, dass** mehrere Prallkühllöcher (32), deren Mittelachsen (33) sich der Mittelachse (34) des Bolzens (31) treffen, ausgebildet sind.

3. Gasturbinenbrennkammer nach Anspruch 2, **dadurch gekennzeichnet, dass** der Schnittpunkt (40) der Mittelachsen (33) der Prallkühllöcher (32) auf der Heißgasseite der Brennkammerschindel (30) angeordnet ist.

4. Gasturbinenbrennkammer nach Anspruch 3, **dadurch gekennzeichnet, dass** der Schnittpunkt (40) von der Oberfläche der Brennkammerschindel (30) beabstandet ist.

5. Gasturbinenbrennkammer nach einem der Ansprüche 1 bis 4, **dadurch gekennzeichnet, dass** um den Umfang des Bolzens (31) mehrere Prallkühllöcher (32) angeordnet sind.

6. Gasturbinenbrennkammer nach Anspruch 5, **dadurch gekennzeichnet, dass** die mehreren Prallkühllöcher (32) gleichmäßig verteilt um den Bolzen (31) angeordnet sind.

7. Gasturbinenbrennkammer nach Anspruch 5, **dadurch gekennzeichnet, dass** die mehreren Prallkühllöcher (32) asymmetrisch verteilt um den Bolzen (31) angeordnet sind.

8. Gasturbinenbrennkammer nach einem der Ansprüche 1 bis 7, **dadurch gekennzeichnet, dass** stromauf, bezogen auf die Durchströmungsrichtung der Brennkammer (15), zumindest ein Effusionsloch (36) zur Kühlung des Bolzenbefestigungsbereichs (37) der Schindel (30) in der Schindel (30) ausgebildet ist.

9. Gasturbinenbrennkammer nach einem der Ansprüche 1 bis 8, **dadurch gekennzeichnet, dass** der Bolzen (31) in Form eines an die Brennkammerschindel (30) angegossenen Gewindebolzens ausgebildet ist.

10. Gasturbinenbrennkammer nach einem der Ansprüche 1 bis 8, **dadurch gekennzeichnet, dass** der Bolzen (31) in Form einer Schraube ausgebildet ist, welche in ein Innengewinde einer Aufdickung (41) der Brennkammerschindel (30) einschraubbar ist.

11. Gasturbinenbrennkammer nach einem der Ansprüche 1 bis 10, **dadurch gekennzeichnet, dass** der Übergangsbereich (35) im Querschnitt kreis- oder ellipsentorus-förmig ausgebildet ist.
